Europäisches Patentamt

European Patent Office

Office européen des brevets

(11) Veröffentlichungsnummer: **0 190 397**
**B1**

# EUROPÄISCHE PATENTSCHRIFT

(45) Veröffentlichungstag der Patentschrift:
09.08.89

(51) Int. Cl.⁴: **G 01 M 1/32**, **B 24 D 5/16**

(21) Anmeldenummer: 85112576.5

(22) Anmeldetag: 04.10.85

(54) Verfahren zum fortlaufenden Ausgleich einer Unwucht eines Rotors, insbesondere einer Schleifscheibe.

(30) Priorität: 04.02.85 DE 3503724

(43) Veröffentlichungstag der Anmeldung:
13.08.86 Patentblatt 86/33

(45) Bekanntmachung des Hinweises auf die Patenterteilung: 09.08.89 Patentblatt 89/32

(84) Benannte Vertragsstaaten:
AT CH FR GB IT LI

(56) Entgegenhaltungen:
DE—U— 7 341 264
SOVIET INVENTIONS ILLUSTRATED, Woche K34, 5. Oktober 1983, Zusammenfassungsnr. 746344/34 S02, Derwent Publications Ltd., London, GB; & SU - A - 968 642 (ZHIVOTOV YU G) 23.10.1982
SOVIET INVENTIONS ILLUSTRATED, Woche K24, 27. Juli 1983, Zusammenfassungsnr. J0740 S02, Derwent Publications Ltd., London, GB; & SU - A - 949 367 (ZHIVOTOV YU G) 07.08.1982

(73) Patentinhaber: HOFMANN WERKSTATT-TECHNIK GMBH
Werner-von-Siemens-Strasse 2
D-6102 Pfungstadt (DE)

(72) Erfinder: Menigat, Roland
Brunnenstrasse 11
D-6237 Liederbach (DE)
Erfinder: Gruppenbacher, Klaus
Holzhäuserweg 17
D-6110 Dieburg (DE)

(74) Vertreter: Nöth, Heinz, Dipl.-Phys.
Patentanwälte Pfenning, Meinig & Partner Mozartstrasse 17
D-8000 München 2 (DE)

## Beschreibung

Die Erfindung betrifft ein Verfahren nach dem Oberbegriff des Anspruchs 1.

Ein derartiges Verfahren ist aus der DE-OS 23 57 629 bekannt. Bei der Anwendung von Schleifscheiben oder ähnlichen Rotoren zur Bearbeitung von Werkstücken wird im Gegensatz zum bekannten Verfahren, bei dem eine konstante Drehzahl der Schleifscheibe vorliegt, eine konstante Schnittgeschwindigkeit und damit eine konstante Geschwindigkeit der zur Materialbearbeitung dienenden Umfangsfläche des Rotors gefordert. Bei der Materialbearbeitung ergibt sich zwangsläufig eine Abnutzung an der Arbeitsfläche am Umfang des Rotors, insbesondere der Schleifscheibe, weshalb dann die Drehzahl des Rotors erhöht werden muß. In der Praxis ist es so, daß das Durchfahren eines Drehzahlbereichs von 750 bis 2 000 Umdrehungen pro Minute erforderlich wird. Es läßt sich dann nicht mehr vermeiden, daß aufgrund der zwangsläufig vorgegebenen Massen von Lager, Spindel und Rotor, z. B. Spindelstock und Schleifscheibe, der Rotor im unterkritischen und überkritischen Bereich arbeitet und beim Übergang vom unterkritischen in den überkritischen Bereich den kritischen Drehzahlbereich durchläuft. Beim Durchlaufen des kritischen Drehzahlbereichs erfolgt eine Phasenverschiebung zwischen der Unwuchtwinkellage und der zugehörigen Schwingbewegung von 0° nach 180°. Das vom Meßgeber ermittelte Schwingungssignal kann dann nicht mehr zur gezielten Steuerung des Massenausgleichs verwendet werden, da beim Durchlaufen des kritischen Drehzahlbereichs die angesprochene Phasenverschiebungsverlauf sich naturgemäß einstellt.

Das vom Meßgeber abgegebene Unwuchtsignal wird auch noch vom Maschinenverhalten beeinflußt, das nicht bekannt ist und sich ständig ändert, weil bei der Materialbearbeitung mit Hilfe von Rotoren, z. B. mit Hilfe von Schleifscheiben, sich die Masse des Rotors laufend ändert. Andererseits ist jedoch, um eine genaue Materialbearbeitung zu erzielen, ein ständiges Auswuchten des Rotors, insbesondere der Schleifscheibe während des Bearbeitungsbetriebs, erforderlich, um schlechte Bearbeitungsqualität, Rattern, Welligkeiten und unerwünschte Relativbewegungen zwischen Werkstück und Drehwerkzeug zu vermeiden.

Aufgabe der Erfindung ist es daher, ein Verfahren der eingangs genannten Art zu schaffen, bei dem auch beim Durchlaufen des Rotors durch den kritischen Drehzahlbereich eine genaue Auswuchtung des Rotors während des Betriebs erreicht wird.

Diese Aufgabe wird erfindungsgemäß durch die kennzeichnenden Merkmale des Anspruchs 1 gelöst.

Die abhängigen Ansprüche kennzeichnen vorteilhafte Weiterbildungen der Erfindung.

Hierdurch wird in vorteilhafter Weise erreicht, daß die Bearbeitung eines Werkstücks mittels des Rotors immer mit konstanter Bearbeitungs- bzw. Schnittgeschwindigkeit erfolgen kann, wobei die Qualität der Bearbeitung aufgrund der genauen Auswuchtung des Rotors auch im kritischen Drehzahlbereich immer gewährleistet wird.

Für die Bemessung der Testmenge der bei einem Ausgleichsvorgang zunächst in eine der Ausgleichskammern einzubringenden Ausgleichsflüssigkeit empfiehlt es sich, die kleinste genau reproduzierbare Menge an Ausgleichsflüssigkeit zu wählen. Diese ist vorgegeben durch die Schaltzeiten der Ventile, mit denen das Einbringen der Ausgleichsflüssigkeit in die Ausgleichskammern bemessen wird, der Arbeitsgeschwindigkeit der Auswerteelektronik bzw. des für die Auswertung verwendeten Rechners und dem normalerweise vorhandenen Druck in der Zuleitung für die Ausgleichsflüssigkeit.

Die Testmenge der Ausgleichsflüssigkeit wird bevorzugt in die der ermittelten Unwuchtwinkellage entgegengesetzt liegende Kammer eingebracht, weil hierdurch die bestmögliche Genauigkeit bei der Ermittlung der zwischen dem Rotor und dem Meßwertaufnehmer wirksam werdenden Übertragungsfunktion, die sich als die vorstehend bezeichnete Phasenverschiebung und als Amplitudenfehler im vom Meßgeber für die Unwuchtgröße abgegebenen Amplitudensignal gegenüber der tatsächlichen am Rotor vorhandenen Unwuchtgröße auswirkt.

In bevorzugter Weise wird die bei dem jeweiligen Ausgleichsvorgang ermittelte Phasenverschiebung abgespeichert als Ausgangswert für den nächstfolgenden Ausgleichsvorgang. Man gewinnt dadurch für die aufeinanderfolgenden Ausgleichsvorgänge eine feingestufte Phasenanpassung, insbesondere im kritischen Drehzahlbereich, oder es wird ein Selbstlernprozeß erreicht, wenn die Abspeicherung der Phasenverschiebung bzw. des Skalierungsfaktors für eine erneute nachfolgende Ermittlung des Übertragungsverhaltens (Phasenverschiebung, Amplitudenübertragungsfehler) der Übertragungsstrecke zwischen Rotor und Meßgeber gespeichert wird.

Um Auswirkungen von Nichtlinearitäten bei der Übertragung der Unwuchtsignale gering zu halten, ist es von Vorteil, nur die Hälfte der für den Ausgleich der Restunwucht ermittelten Ausgleichsmenge der Ausgleichsflüssigkeit zu verwenden. Die benötigte Ausgleichsflüssigkeit wird bevorzugt auf zwei Ausgleichskammern verteilt.

Für die fortlaufende Unwuchtmessung empfiehlt sich das « Auto-Tracking-Meßverfahren », das aus Hofmann News, Nr. 5 der Fa. Gebr. Hofmann GmbH & Co., KG, D-6102 Pfungstadt bekannt ist. Bei diesem Verfahren handelt es sich um die Kombination eines über den gesamten Drehzahlbereich des Wuchtkörperps kontinuierlich mitgeführten Filters (Tracking-Filter), einer phasenempfindlichen Gleichrichtung und einer automatischen Selektivitätsanpassung während der Messung.

Die beiliegenden Figuren dienen zur weiteren Erläuterung der Erfindung. Es zeigt:

Fig. 1 zwei Kurvendarstellungen für das schwingungsverhalten eines unwuchtigen Rotors, der aus dem unterkritischen Drehzahlbereich in den überkritischen Drehzahlbereich hochdreht;

Fig. 2 in schematischer Blockschaltbilddarstellung die Anordnung der einzelnen Funktionsbausteine, die bei Durchführung der Erfindung zur Anwendung kommen und

Fig. 3 ein Flußdiagramm, in welchem der erfindungsgemäße Ablauf eines Auswuchtvorgangs dargestellt ist.

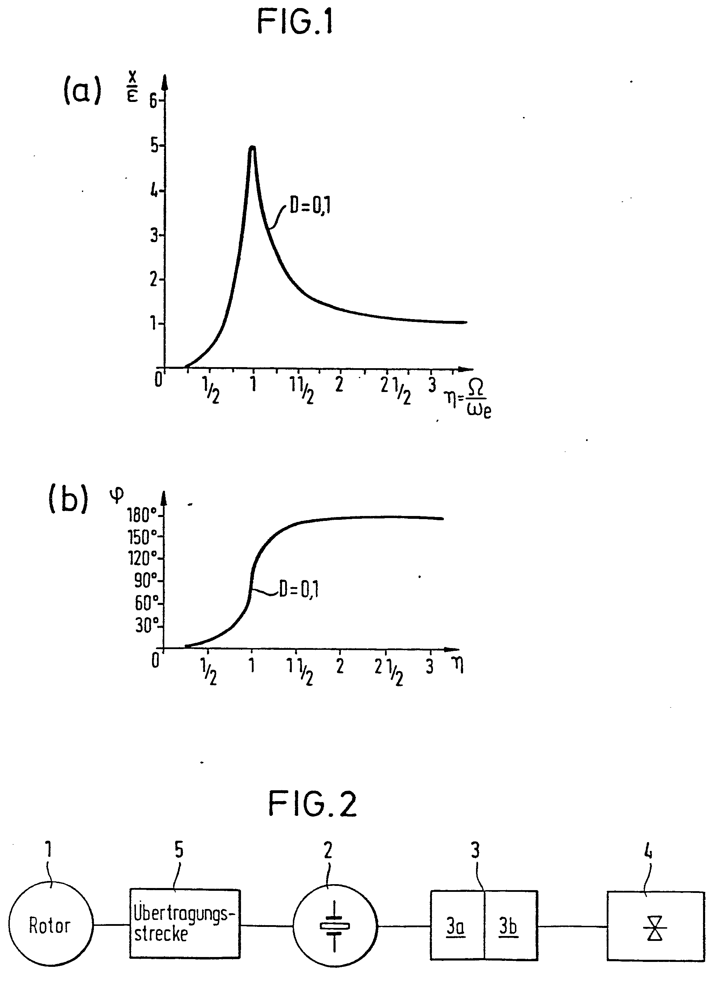

In der Kurvendarstellung der Fig. 1a ist der Amplitudenverlauf eines gedämpft schwingenden, unwuchtigen Rotors dargestellt, wobei auf der Abszisse das Verhältnis $\eta$ von Erregerkreisfrequenz $\Omega$ des unwuchtigen Rotors zu der Eigenkreisfrequenz $\omega_e$ des Rotors und auf der Ordinate des Verhältnis von Schwingwegvektor X zu Schwerpunktsexzentrizität $\varepsilon$ aufgetragen sind. Die Dämpfung D beträgt 0,1. In der Kurvendarstellung der Fig. 1b ist der Verlauf der Phasenverschiebung $\varphi$ gegenüber dem vorstehend beschriebenen Frequenzverhältnis $\eta$ aufgetragen und zwar beginnend im unterkritischen Drehzahlbereich (Phasenverschiebung $\varphi = 0$) ansteigend durch den kritischen Drehzahlbereich (Resonanzbereich) bis in den überkritischen Drehzahlbereich (Phasenverschiebung $\varphi = 180°$). Wie insbesondere aus der Kurvendarstellung 1b zu ersehen ist, verändert sich die Phasenverschiebung zwischen der Winkellage der Unwucht am Rotor gegenüber der hieraus resultierenden Schwingbewegung mit steigender Drehzahl sehr stark, so daß bei Rotoren, die in diesem Drehzahlbereich drehen bzw. arbeiten und eine Unwucht aufweisen, ein einwandfreier Unwuchtausgleich nicht möglich war.

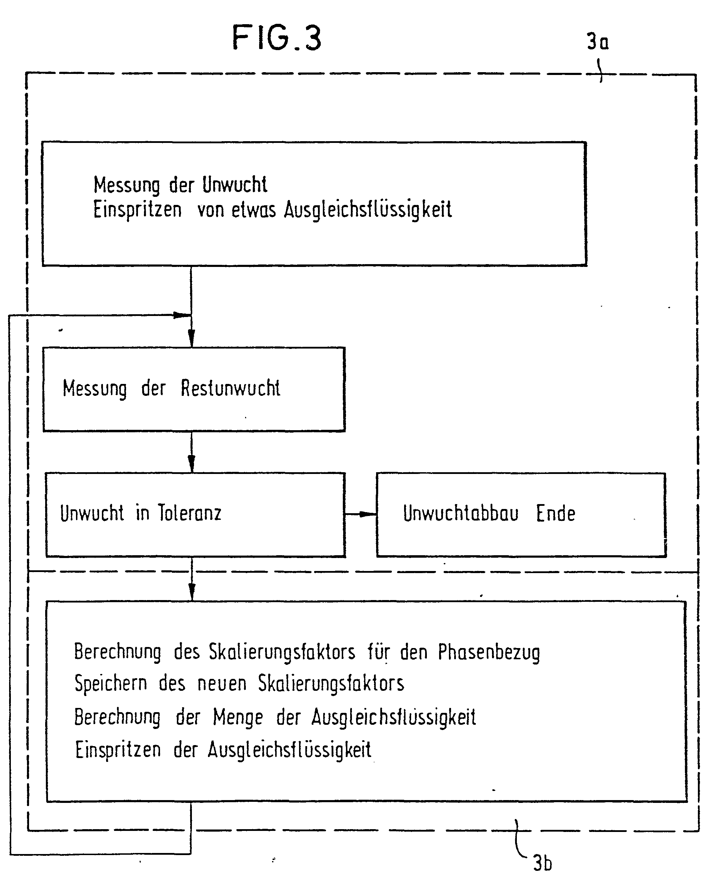

Bei dem in der Fig. 2 dargestellten Ausführungsbeispiel einer Vorrichtung zur Durchführung der Erfindung ist von einer nicht näher dargestellten Schliefmaschine eine Schleifscheibe 1 gezeigt, deren während des Schleifbetriebs entstehende Unwuchten fortlaufend in aufeinanderfolgenden Ausgleichsvorgängen ausgeglichen werden. Die von der Unwucht der Schleifscheibe 1 hervorgerufenen Schwingungen werden über eine Übertragungsstrecke 5 von einem Meßgeber 2, insbesondere einem Beschleunigungsaufnehmer erfaßt und in Form von entsprechenden Meßsignalen an eine Meß- und Regelelektronik 3 weitergeleitet. Diese Elektronik setzt sich zusammen aus einer Meßelektronik 3a, in welcher die Unwuchten der Schleifscheibe 1 über den gesamten Drehzahlbereich der Scheifscheibe hin fortlaufend nach Größe und Richtung ermittelt werden, und einer nachgeschalteten Auswerte- und Regelelektronik 3b, in der in Abhängigkeit von den jeweils ermittelten Unwuchtwerten, wie im einzelnen noch anhand der Fig. 3 erläutert wird, eine Ventileinrichtung 4 einer beispielsweise aus der DE-OS 23 57 629 bekannten in der Figur jedoch nicht näher dargestellten Ausgleichseinrichtung angesteuert wird.

Der bei der Erfassung der von der Rotorunwucht ausgelösten Schwingungen in der Übertragungsstrecke 5 vorhandene Phasenunterschied (Phasenverschiebung $\varphi$) zwischen Unwuchtwinkellage und hiervon ausgelöster Schwingbewegung sowie der maschinenbedingte Amplitudenübertragungsfehler in der Übertragungsstrecke 5 werden nach Erfassung der vom Meßgeber 2 abgegebenen Meßsignale durch die Meßelektronik 3a in der Auswerteelektronik 3b, welche beispielsweise ein Rechner sein kann, wie folgt festgestellt und dann zur entsprechenden Steuerung der Ventile der Ventileinrichtung 4 verwendet.

Nach dem Erfassen der vom Meßgeber 2 abgegebenen Unwuchtmeßsignale, welche noch mit dem auch maschinenbedingten Phasenfehler und Amplitudenfehler der Übertragungsstrecke 5 behaftet sind, wird eine geringe Testmenge der Ausgleichsflüssigkeit in die der Unwuchtwinkellage am Rotor 1 gegenüberliegende Ausgleichskammer eingespritzt. Es wird die hieraus resultierende Restunwucht wiederum gemessen und gegebenenfalls bei Einhaltung der Toleranz der Unwuchtausgleichsvorgang abgebrochen. Wenn die Restunwucht die Toleranzgrenze überschreitet, wird aus den Werten der Anfangsunwucht, die noch mit dem Phasenfehler und Amplitudenfehler behaftet sind, aus der Testmenge der Ausgleichsflüssigkeit und der Winkellage der Kammer, in welche die Testmenge der Ausgleichsflüssigkeit eingebracht wurde, sowie aus der gemessenen Restunwucht nach dem Einbringen der Testmenge der Ausgleichsflüssigkeit, der Amplitudenfehler und der Phasenfehler in der Übertragungsstrecke 5 ermittelt und bei der Bemessung der Ausgleichsmenge, mit welcher die Restunwucht ausgeglichen wird, verwendet. Der Skalierungsfaktor für die Phasenverschiebung ist gespeichert und kann bei der Ermittlung des Phasenverzugs im nachfolgenden Unwuchtausgleichsvorgang verwendet werden. In Abhängigkeit von der ermittelten Ausgleichsmenge wird dann das entsprechende Ventil bzw. die entsprechenden Ventile der Ventileinrichtung 4 für einen bestimmten Zeitraum geöffnet, so daß die entsprechende Ausgleichsmenge der Ausgleichsflüssigkeit in die entsprechende Ausgleichskammer bzw. entsprechenden Ausgleichskammern eingebracht wird.

## Patentansprüche

1. Verfahren zum fortlaufenden Ausgleich einer Unwucht eines Rotors (1), insbesondere einer Schleifscheibe, bei dem in Abhängigkeit von einer mittels Meßgeber (2) ermittelten Ausgangsunwucht in mit dem Rotor als Rotationseinheit umlaufende, in unterschiedlichen Rotorwinkellagen angeordnete Ausgleichskammern eine Ausgleichsflüssigkeit in aufeinanderfolgenden Ausgleichsvorgängen, während der Rotor umläuft, eingebracht wird, dadurch gekennzeichnet, daß zur Durchführung eines Ausgleichsvorganges zunächst eine geringere Menge, Testmenge, als die in Abhängigkeit von der Ausgangsunwucht für den Unwuchtausgleich ermittelte Menge an Ausgleichsflüssigkeit in eine bestimmte Ausgleichskammer eingebracht wird und aus der dann ermittelten Restunwucht, der Ausgangsunwucht und der in die bestimmte Ausgleichskammer eingebrachten Testmenge der Ausgleichsflüssigkeit sowie der Winkellage dieser bestimmten Ausgleichskammer, eine Phasenverschiebung zwischen der tatsächlichen Unwuchtlage der Ausgangsunwucht und der vom Meßgeber abgegebenen Unwuchtwinkellage sowie ein Amplitudenübertragungsfehler, der die Abweichung des vom Meßgeber abgegebenen Unwuchtgrößensignals von der tatsächlichen Unwuchtgröße angibt, ermittelt werden und daß dann eine für den Ausgleich der Restunwucht hieraus ermitelte Ausgleichsmenge der Ausgleichsflüssigkeit in die ebenfalls hieraus unter Berücksichtigung der Phasenverschiebung ermittelte Ausgleichskammer oder ermittelten Ausgleichskammern eingebracht wird.

2. Verfahren nach Anspruch 1, dadurch gekennzeichnet, daß die kleinste genau reproduzierbare Menge an Ausgleichsflüssigkeit als Testmenge in die entsprechende Ausgleichskammer eingebracht wird.

3. Verfahren nach Anspruch 1 oder 2, dadurch gekennzeichnet, daß die Testmenge der Ausgleichsflüssigkeit in die der ermittelten Unwuchtlage entgegengesetzt liegende Kammer eingebracht wird.

4. Verfahren nach Anspruch 1, dadurch gekennzeichnet, daß die zwischen der tatsächlichen Unwuchtlage der Ausgangsunwucht und der vom Meßgeber abgegebenen Unwuchtwinkellage ermittelte Phasenverschiebung als Ausgangswert für den nachfolgenden Ausgleichsvorgang oder für eine nachfolgende erneute Ermittlung des Übertragungsverhaltens (Phasenverschiebung, Amplitudenübertragungsfehler) der Übertragungsstrecke zwischen Rotor und Meßgeber gespeichert wird.

5. Verfahren nach einem der Ansprüche 1 bis 4, dadurch gekennzeichnet, daß die Hälfte der für den Ausgleich der Restunwucht ermittelten Ausgleichsmenge verwendet wird.

6. Verfahren nach einem der Ansprüche 1 bis 5, dadurch gekennzeichnet, daß die Ausgleichsmenge auf zwei Ausgleichskammern verteilt wird.

## Claims

1. A method of continuously compensating for unbalance of a rotor (1), in particular a grinding wheel, in which, in dependence on an initial unbalance which is detected by means of a sensor device (2), a compensating fluid is introduced into compensating chambers which rotate with the rotor as a rotational unit and which are arranged at different rotor angular positions in successive compensating operations while the rotor is rotating characterised in that for carrying out a compensating operation, a smaller amount of compensating fluid, a test amount, than the amount detected in dependence on the initial unbalance, for compensating for the unbalance, is introduced into a given compensating chamber and from the residual unbalance which is then detected, the initial unbalance and the test amount of compensating fluid which is introduced into the given compensating chamber as well as the angular position of said given compensating chamber, a phase displacement as between the actual position of the initial unbalance and the unbalance angular position outputted by the sensor device as well as an amplitude transmission error which gives the deviation of the signal in respect of magnitude of the unbalance, which is outputted by the sensor device, from the actual magnitude of the unbalance, are ascertained, and that then a compensating amount of compensating fluid which for compensating for the residual unbalance is ascertained therefrom is introduced into the compensating chamber or chambers which are also ascertained therefrom, in consideration of the phase displacement.

2. A method according to claim 1 characterised in that the smallest, accurately reproducible amount of compensating fluid is introduced as a test amount into the appropriate compensating chamber.

3. A method according to claim 1 or claim 2 characterised in that the test amount of compensating fluid is introduced into the chamber which is disposed in opposite relationship to the ascertained position of the unbalance.

4. A method according to claim 4 characterised in that the phase displacement which is ascertained as between the actual position of the initial unbalance and the angular position of the unbalance which is outputted by the sensor device is stored as an initial value for the subsequent compensating operation or for a subsequent operation of again ascertaining the transmission characteristics (phase displacement and amplitude transmission error) of the transmission section between the rotor and the sensor device.

5. A method according to one of claims 1 to 4 characterised by using half the compensating amount ascertained for compensation of the residual unbalance.

6. A method according to one of claims 1 to 5 characterised in that the compensating amount is distributed to two compensating chambers.

## Revendications

1. Procédé pour la compensation continue d'un déséquilibre d'un rotor (1), en particulier d'une meule, dans lequel, en dépendance d'un déséquilibre de départ déterminé au moyen d'un organe de mesure (2), un liquide de compensation est introduit, pendant que le rotor tourne et suivant des processus de compensation successifs, dans des chambres placées en différentes positions angulaires du rotor et tournant comme une unité de rotation avec le rotor, caractérisé en ce que, pour l'exécution d'un processus de compensation, d'abord une petite quantité, quantité d'essai, de liquide de compensation comme quantité déterminée pour la compensation du déséquilibre en dépendance du déséquilibre initial, est introduite dans une chambre de compensation déterminée ; et en ce que, d'après le déséquilibre restant déterminé sur la base du déséquilibre de départ et de la quantité d'essai introduite dans la chambre de compensation déterminée, ainsi que de la position angulaire de cette chambre de compensation déterminée, sont déterminés un décalage de phase entre la position de déséquilibre effective du déséquilibre de départ et la position angulaire de déséquilibre indiquée par l'organe de mesure, ainsi qu'un défaut de transmission d'amplitude qui indique l'écart du signal de grandeur de déséquilibre fourni par l'organe de mesure, par rapport à la grandeur de déséquilibre effective ; et en ce qu'alors, une quantité de liquide de compensation déterminée d'après cela pour la compensation du déséquilibre restant est introduite dans la chambre de compensation ou dans des chambres de compensation déterminées également d'après cela en tenant compte du décalage de phase.

2. Procédé suivant la revendication 1, caractérisé en ce que la plus petite quantité exactement reproductible de liquide de compensation est introduite comme quantité d'essai dans la chambre de compensation correspondante.

3. Procédé suivant la revendication 1 ou 2, caractérisé en ce que la quantité d'essai de liquide de compensation est introduite dans la chambre opposée à la position de déséquilibre déterminée.

4. Procédé suivant la revendication 1, caractérisé en ce que le décalage de phase déterminé entre la position de déséquilibre effective du déséquilibre de départ et la position angulaire de déséquilibre indiquée par l'organe de mesure, est mis en mémoire comme valeur de départ pour le processus de compensation suivant ou pour une détermination suivante renouvelée du comportement de transmission (décalage de phase, défaut de transmission d'amplitude) du parcours de transmission entre le rotor et l'organe de mesure.

5. Procédé suivant l'une des revendications 1 à 4, caractérisé en ce que l'on emploie la moitié de la quantité de compensation déterminée pour la compensation du déséquilibre restant.

6. Procédé suivant l'une des revendications 1 à 5, caractérisé en ce que la quantité de compensation est répartie sur deux chambres de compensation.

# FIG.1

(a)

(b)

# FIG.2

# FIG.3

3a

```
┌─────────────────────────────────────────────────────────┐
│  ┌───────────────────────────────────────────────┐      │
│  │                                               │      │
│  │  Messung der Unwucht                          │      │
│  │  Einspritzen von etwas Ausgleichsflüssigkeit  │      │
│  │                                               │      │
│  └───────────────────────────────────────────────┘      │
│                          │                               │
│  ┌──────────────────────┐▼                              │
│  │ ┌─────────────────────────────┐                      │
│  │ │                             │                      │
│  │ │  Messung der Restunwucht    │                      │
│  │ │                             │                      │
│  │ └─────────────────────────────┘                      │
│  │               │                                      │
│  │               ▼                                      │
│  │ ┌─────────────────────────┐   ┌──────────────────────┐
│  │ │                         │──▶│                      │
│  │ │  Unwucht in Toleranz    │   │  Unwuchtabbau Ende   │
│  │ │                         │   │                      │
│  │ └─────────────────────────┘   └──────────────────────┘
```

Berechnung des Skalierungsfaktors für den Phasenbezug

Speichern des neuen Skalierungsfaktors

Berechnung der Menge der Ausgleichsflüssigkeit

Einspritzen der Ausgleichsflüssigkeit

3b